# EUROPEAN PATENT SPECIFICATION

(11) **EP 0 648 949 B1**
(45) Date of publication and mention of the grant of the patent: **16.12.1998**
(21) Application number: 94202698.0
(22) Date of filing: 20.09.1994
(51) Int. Cl.: F16D 3/84, G01P 3/488, F16B 17/00

(54) **A method of securing a boot of a universal joint**
Verfahren zur Befestigung einer Balgmanschette auf ein Gelenk
Procédé de fixation d'un soufflet sur un joint universel

(30) Priority: 13.10.1993 GB 9321135
(43) Date of publication of application: 19.04.1995
(73) Proprietor: Delphi France Automotive Systems, 92257 La Garenne-Colombes (FR)
(72) Inventor: Constantin, Thierry Didier, F-92110 Clichy (FR)
(74) Representative: Denton, Michael John

(56) References cited:
- GB-A- 2 186 037
- US-A- 1 329 479
- US-A- 3 914 852

## Description

This invention relates to a method of securing a boot of a universal joint of a motor vehicle using a ring clamp in which the ring clamp can additionally act as a toothed ring of a rotational speed sensor for, for example, an anti-lock braking system and/or a traction control system for the motor vehicle.

GB 2,186,037A discloses a known arrangement for a universal joint. The boot is secured in place at one end on an outer joint member by a ring clamp which may be provided with teeth for a rotational speed sensing system. In this known arrangement, the ring clamp has an internal diameter which is slightly smaller than the external diameter of the outer joint member prior to installation. The ring clamp is slid in an axial direction into position, and expanded to secure one end of the boot. This arrangement is a difficult assembly process, can cause damage to the boot, and can distort the shape and separation of the teeth (thereby resulting in inaccuracy of the sensed speed).

The object of the present invention is to overcome the above problems.

A method of securing one end of a boot of a universal joint in accordance with the present invention comprises the steps of positioning said one end of the boot around a portion of the universal joint; positioning a ring clamp having an internal diameter greater than the external diameter of the portion of the universal joint around said one end of the boot; and swaging the ring clamp to compress the ring clamp onto the boot to secure said one end of the boot on the portion of the universal joint and to form teeth of predetermined shape, size and separation in an outer surface of the ring clamp.

This arrangement has the advantage of providing an easier method of attaching the ring clamp and reduces the risk of damaging the boot. Further, the swaging step, which is the final step, ensures that the teeth are accurately formed to the required shape, size and separation for a rotational speed sensor.

The present invention will now be described, by way of example, with reference to the accompanying drawings, in which:-
Figure 1 is a side view of a universal joint of a motor vehicle including a boot in which one end of the boot is secured in place by a ring clamp in accordance with the present invention;
Figure 2 is a schematic view of the universal joint of Figure 1 prior to swaging the ring clamp;
Figure 3 is a cross-sectional view of the ring clamp of Figure 2 taken on the line III-III;
Figure 3A is an enlarged view of a portion of the ring clamp of Figure 3 with a portion of a swaging tool positioned alongside prior to swaging;
Figure 3B is the same view as Figure 3A after swaging has occurred; and
Figure 3C is an alternative arrangement to that of Figure 3A in which teeth are pre-formed in the ring clamp.

Referring to the drawings, a universal joint 10 is shown which comprises an input shaft 12 having an outer joint member 14, an output shaft 16, and a boot 18. The details of the inner arrangements of the universal joint 10 are not shown, but can be any suitable arrangement known to those skilled in the art. One end 20 of the boot 18 is secured by a ring clamp 22 to the outer joint member 14. The other end 24 of the boot 18 is secured to the output shaft 16 by any suitable means 26 known to those skilled in the art. The boot 18 is typically formed of elastomeric material and acts to retain grease within the universal joint 10 and to keep dirt out of the universal joint.

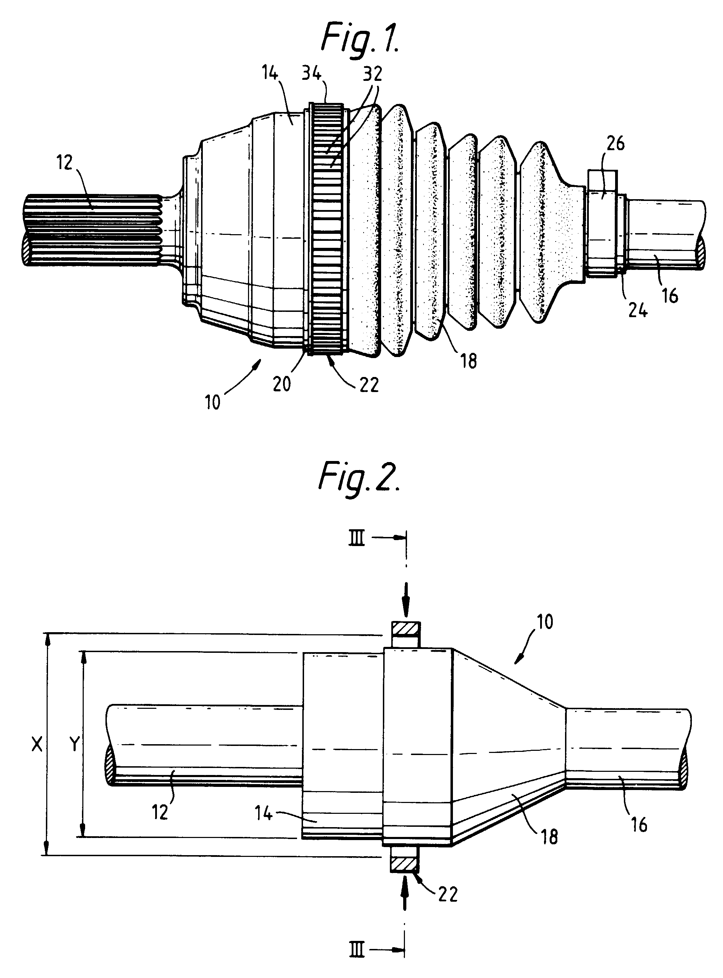

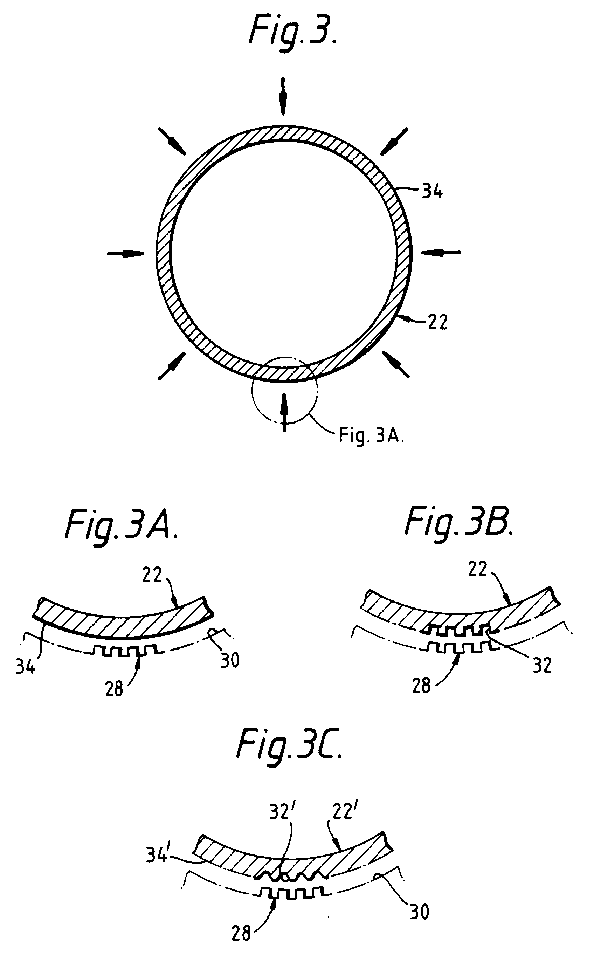

The ring clamp 22 is formed from any suitable metallic material and, as can be seen in Figure 2, has an initial internal diameter X which is greater than the largest external diameter Y of the outer joint member 14. The assembly of the universal joint 10 includes placing the one end 20 of the boot 18 around the outer joint member 14, positioning the ring clamp 22 around the one end 20, and swaging the ring clamp in a radially inward direction as indicated by the arrows in Figures 2 and 3. The swaging step is carried out using a tool 28 (Figure 3A) having a specially shaped inner surface 30. The swaging step compresses the ring clamp 22 to secure the one end 20 of the boot 18 to the outer joint member 14. The swaging step also forms teeth 32 (Figure 1 and 3B) in the outer surface 34 of the ring clamp 22. The teeth 32 have a predetermined shape, size and separation such that the teeth are suitable for use with a rotational speed sensor. Rotational speed sensors on motor vehicle are used for numerous monitoring and control operations, including anti-lock braking and traction control.

In an alternative arrangement, teeth 32'(Figure 3C) are formed in the outer surface 34' of the ring clamp 22' prior to the swaging step. The swaging step then acts to bring the teeth to the required predetermined shape, size and separation.

In an alternative arrangement to the above embodiment, the ring clamp may be positioned at the other end of the boot to secure the other end of the boot to the output shaft. In this case, prior to installation, the internal diameter of the ring clamp must be greater than the external diameter of the output shaft.

## Claims

1. A method of securing one end (20) of a boot (18) of a universal joint (10) comprising the steps of positioning said one end of the boot around a portion (14) of the universal joint; positioning a ring clamp (22) having an internal diameter greater than the external diameter of the portion of the universal joint around said one end of the boot; and swaging the ring clamp to compress the ring clamp onto the boot to secure said one end of the boot on the portion of the universal joint and to form teeth (32) of predetermined shape, size and separation in an outer surface (34) of the ring clamp.

2. A method as claimed in claim 1 comprising pre-forming teeth (32') in the outer surface (34') of the ring clamp (22')prior to swaging, the swaging step adjusting the teeth (32) to the predetermined shape, size and separation.

## Patentansprüche

1. Verfahren zum Befestigen eines Endes (20) einer Manschette (18) eines Universalgelenks (10) mit den Schritten, daß das eine Ende der Manschette um einen Abschnitt (14) des Universalgelenks herum angeordnet wird, daß eine Ringklammer (22), die einen größeren Innendurchmesser als der Außendurchmesser des Abschnitts des Universalgelenks aufweist, um das eine Ende der Manschette herum angeordnet wird, und daß die Ringklammer gestaucht wird, um die Ringklammer auf der Manschette zusammenzudrücken und somit das eine Ende der Manschette an dem Abschnitt des Universalgelenks zu befestigen und Zähne (32) mit einer vorbestimmten Form, Größe und Teilung in einer Außenfläche (34) der Ringklammer zu bilden.

2. Verfahren nach Anspruch 1, das umfaßt, daß vor dem Stauchen Zähne (32') in der Außenfläche (34') der Ringklammer (22') im voraus gebildet werden, wobei der Stauchschritt die Zähne (32) auf die vorbestimmte Form, Größe und Teilung einstellt.

## Revendications

1. Procédé de fixation d'une extrémité (20) d'un soufflet (18) d'un joint universel (10) comprenant les étapes consistant à positionner ladite une extrémité du soufflet autour d'une partie (14) du joint universel ; à positionner un serre-joint en anneau (22) ayant un diamètre intérieur supérieur au diamètre extérieur de la partie du joint universel autour de ladite une extrémité du soufflet ; et à presser ou estamper le serre-joint en anneau pour comprimer le serre-joint en anneau sur le soufflet afin de fixer ladite une extrémité du soufflet sur la partie du joint universel et pour constituer des dents (32) de forme, de taille et d'écartement prédéterminés dans une surface extérieure (34) du serre-joint en anneau.

2. Procédé selon la revendication 1 comprenant des dents pré-formées (32') dans la surface extérieure (34') du serre-joint en anneau (22') avant l'estampage, l'étape d'estampage permettant d'ajuster les dents (32) à la forme, à la taille et à l'écartement prédéterminés.
